# EUROPEAN PATENT SPECIFICATION

(11) **EP 4 589 745 B1**
(45) Date of publication and mention of the grant of the patent: **17.06.2026**
(21) Application number: 24219258.1
(22) Date of filing: 12.12.2024
(51) Int. Cl.: H01M 10/42, H01M 50/213, H01M 50/247, H01M 50/284, H01M 50/519, H01M 50/296, H01M 50/559

(54) **BATTERY PACK APPLICABLE TO A POWER TOOL**
BATTERIEPACK ANWENDBAR FÜR EIN ELEKTROWERKZEUG
BLOC-BATTERIE APPLICABLE À UN OUTIL ÉLECTRIQUE

(30) Priority: 19.01.2024 CN 202410084915
(43) Date of publication of application: 23.07.2025
(73) Proprietor: Nanjing Chervon Industry Co., Ltd., Nanjing, Jiangsu 211106 (CN)
(72) Inventor: WANG, Huaishu, Nanjing (CN); PAN, Zhigang, Nanjing (CN)
(74) Representative: Sun, Yiming

(56) References cited:
- EP-A1- 4 293 803
- CN-U- 216 529 019
- CN-U- 219 873 802
- US-A1- 2022 158 262
- US-A1- 2023 223 639
- US-A1- 2023 395 948
- US-A1- 2024 088 506

## Description

### TECHNICAL FIELD

The present application relates to the technical field of electrical energy storage and, in particular, to a battery pack configured to power a power tool and a power tool.

### BACKGROUND

Generally, a type of power tool may be adapted to one or more types of battery packs, and a battery pack may also be adapted to different types of power tools. However, in general, large tools use relatively large battery packs while small power tools use relatively small battery packs. Some smaller battery packs, for example, battery packs having a rated voltage of 12 V may include only one or more cells. To ensure the compact structure of each of these miniaturized battery packs, only battery pack terminals connectable to a power tool and a charger are typically provided, and other connection ports are not involved.

This part provides background information related to the present application, and the background information is not necessarily the existing art.

### SUMMARY

An object of the present application is to solve or at least alleviate part or all of the preceding problems. Therefore, an object of the present application is to provide a miniaturized battery pack with two types of electrical energy transfer interfaces.

To achieve the preceding object, the present application adopts the technical solutions below.

A battery pack includes: a housing assembly; a connection terminal configured to transfer electrical energy; at least one cell unit disposed in the housing assembly and electrically coupled to the connection terminal; and a type-C port configured to transfer electrical energy. The housing assembly is configured to have a tubular structure. The maximum distance between any two points in a top view of the tubular structure or a bottom view of the tubular structure in an up and down direction is less than or equal to 60 mm.

In an example, the battery pack includes three cell units.

In an example, the maximum height of the tubular structure is less than or equal to 120 mm.

In an example, the maximum height of the tubular structure is less than or equal to 110 mm.

In an example, the battery pack further includes a type-C circuit board, where the type-C port is disposed on the type-C circuit board; and a terminal circuit board, where the connection terminal is disposed on the terminal circuit board. The terminal circuit board and the type-C circuit board are disposed on two end surfaces of the at least one cell unit, respectively.

In an example, the battery pack further includes an indicator for displaying an electric quantity, where the indicator for displaying the electric quantity and the type-C port are disposed on the same surface of the type-C circuit board.

In an example, the battery pack further includes an indicator for displaying an electric quantity, where the indicator for displaying the electric quantity and the type-C port are disposed on different surfaces of the type-C circuit board.

In an example, the indicator for displaying the electric quantity includes multiple lamp beads for displaying the electric quantity or multiple lamp strips for displaying the electric quantity, and the multiple lamp beads for displaying the electric quantity or the multiple lamp strips for displaying the electric quantity are disposed around the type-C port.

In an example, the battery pack further includes a switch member at least operable to activate the battery pack, where the switch member includes at least a switch and an operation member that is operable to trigger the switch, and the switch and the type-C port are disposed opposite to each other on the type-C circuit board.

In an example, the switch member is further configured to be capable of activating the indicator for displaying the electric quantity.

A battery pack applicable to a power tool includes: a housing assembly; a connection terminal disposed on a terminal circuit board to transfer electrical energy; at least one cell unit disposed in the housing assembly and electrically coupled to the connection terminal; and a type-C port disposed on a type-C circuit board to transfer electrical energy. The terminal circuit board and the type-C circuit board are disposed on two end surfaces of the at least one cell unit, respectively.

In an example, the distance between the terminal circuit board and the type-C circuit board along a height direction is less than or equal to 80 mm.

In an example, a battery management system (BMS) management module is disposed on the type-C circuit board.

In an example, the rated voltage of the battery pack is greater than or equal to 8 V.

In an example, an output voltage and/or an input voltage of the type-C port is greater than or equal to 5 V and less than or equal to 21 V.

A battery pack includes: a housing assembly; a connection terminal configured to transfer electrical energy; at least one cell unit disposed in the housing assembly and electrically coupled to the connection terminal; and a type-C port configured to transfer electrical energy. The housing assembly is configured to have a tubular structure. The battery pack further includes a type-C circuit board. The type-C port is disposed on the type-C circuit board. The connection terminal and the type-C circuit board are disposed on two end surfaces of the at least one cell unit, respectively.

In an example, the maximum distance between any two points in a top view of the tubular structure or a bottom view of the tubular structure in an up and down direction is less than or equal to 80 mm.

In an example, the maximum height of the tubular structure is less than or equal to 120 mm.

In an example, the maximum height of the tubular structure is less than or equal to 110 mm.

In an example, the battery pack further includes an indicator for displaying an electric quantity, where the indicator for displaying the electric quantity and the type-C port are disposed on the same surface of the type-C circuit board.

In an example, the battery pack further includes an indicator for displaying an electric quantity, where the indicator for displaying the electric quantity and the type-C port are disposed on different surfaces of the type-C circuit board.

In an example, the indicator for displaying the electric quantity includes multiple lamp beads for displaying the electric quantity or multiple lamp strips for displaying the electric quantity, and the multiple lamp beads for displaying the electric quantity or the multiple lamp strips for displaying the electric quantity are disposed around the type-C port.

In an example, the battery pack further includes a switch member at least operable to activate the battery pack, where the switch member includes at least a switch and an operation member that is operable to trigger the switch, and the switch and the type-C port are disposed opposite to each other on the type-C circuit board.

In an example, the switch member is further configured to be capable of activating the indicator for displaying the electric quantity.

A battery pack includes: a housing assembly; a connection terminal configured to transfer electrical energy; at least one cell unit disposed in the housing assembly and electrically coupled to the connection terminal; and a type-C port configured to transfer electrical energy. The housing assembly is configured to have a tubular structure. The battery pack further includes a type-C circuit board. The type-C port is disposed on the type-C circuit board. The type-C circuit board is disposed between the connection terminal and the at least one cell unit.

In an example, the maximum height of the tubular structure is less than or equal to 120 mm.

In an example, the maximum height of the tubular structure is less than or equal to 110 mm.

In an example, the battery pack further includes an indicator for displaying an electric quantity, where the indicator for displaying the electric quantity and the type-C port are disposed on the same surface of the type-C circuit board.

In an example, the battery pack further includes an indicator for displaying an electric quantity, where the indicator for displaying the electric quantity and the type-C port are disposed on different surfaces of the type-C circuit board.

In an example, the indicator for displaying the electric quantity includes multiple lamp beads for displaying the electric quantity or multiple lamp strips for displaying the electric quantity, and the multiple lamp beads for displaying the electric quantity or the multiple lamp strips for displaying the electric quantity are disposed around the type-C port.

In an example, the battery pack further includes a switch member at least operable to activate the battery pack, where the switch member includes at least a switch and an operation member that is operable to trigger the switch, and the switch and the type-C port are disposed opposite to each other on the type-C circuit board.

In an example, the switch member is further configured to be capable of activating the indicator for displaying the electric quantity.

A battery pack applicable to a power tool includes: a housing assembly; a connection terminal disposed on a terminal circuit board to transfer electrical energy; at least one cell unit disposed in the housing assembly and electrically coupled to the connection terminal; and a type-C port disposed on a type-C circuit board to transfer electrical energy. The type-C circuit board is disposed between the terminal circuit board and the at least one cell unit.

In an example, the maximum height of the tubular structure is less than or equal to 120 mm.

In an example, the maximum height of the tubular structure is less than or equal to 110 mm.

In an example, the battery pack further includes an indicator for displaying an electric quantity, where the indicator for displaying the electric quantity and the type-C port are disposed on the same surface of the type-C circuit board.

In an example, the battery pack further includes an indicator for displaying an electric quantity, where the indicator for displaying the electric quantity and the type-C port are disposed on different surfaces of the type-C circuit board.

In an example, the indicator for displaying the electric quantity includes multiple lamp beads for displaying the electric quantity or multiple lamp strips for displaying the electric quantity, and the multiple lamp beads for displaying the electric quantity or the multiple lamp strips for displaying the electric quantity are disposed around the type-C port.

In an example, the battery pack further includes a switch member at least operable to activate the battery pack, where the switch member includes at least a switch and an operation member that is operable to trigger the switch, and the switch and the type-C port are disposed opposite to each other on the type-C circuit board.

In an example, the switch member is further configured to be capable of activating the indicator for displaying the electric quantity.

### BRIEF DESCRIPTION OF DRAWINGS

To illustrate technical solutions in examples of the present application more clearly, drawings used in the description of the examples are briefly described below. Apparently, the drawings described below illustrate only part of the examples of the present application, and those of ordinary skill in the art may obtain other drawings based on the drawings described below on the premise that no creative work is done.
FIG. 1 is a structural view of a battery pack from an angle of view according to an example of the present application;
FIG. 2 is a structural view of the battery pack in FIG. 1 from another angle of view;
FIG. 3 is a structural view of the battery pack in FIG. 1 from another angle of view;
FIG. 4 is a partial exploded view of a housing of the battery pack in FIG. 1;
FIG. 5 is a schematic view showing part of the internal structure of the battery pack in FIG. 1 from an angle of view;
FIG. 6 is a schematic view showing part of the internal structure of the battery pack in FIG. 1 from another angle of view;
FIG. 7 is a structural view of a type-C circuit board in FIG. 1 from another angle of view;
FIG. 8 is a structural view of a type-C circuit board in FIG. 1 from another angle of view;
FIG. 9 is a structural view of a battery pack from an angle of view according to another example of the present application;
FIG. 10 is a structural view of the battery pack in FIG. 9 from another angle of view;
FIG. 11 is a schematic view showing part of the internal structure of the battery pack in FIG. 9 from an angle of view;
FIG. 12 is a structural view of a battery pack from an angle of view according to another example of the present application;
FIG. 13 is a structural view of the battery pack in FIG. 12 from another angle of view; and
FIG. 14 is a schematic view showing part of the internal structure of the battery pack in FIG. 12 from an angle of view.

### DETAILED DESCRIPTION

Before any example of the present application is explained in detail, it is to be understood that the present application is not limited to its application to the structural details and the arrangement of components set forth in the following description or illustrated in the preceding drawings.

In the present application, the terms "comprising", "including", "having", or any other variation thereof are intended to cover an inclusive inclusion such that a process, method, article, or device comprising a series of elements includes not only those series of elements, but also other elements not expressly listed, or elements inherent in the process, method, article, or device. Without further limitations, an element defined by the phrase "comprising a..." does not preclude the presence of additional identical elements in the process, method, article, or device comprising that element.

In the present application, the term "and/or" is used for describing the association relationship between associated objects, which means that there can be three kinds of relationships. For example, A and/or B can indicate that A exists alone, A and B exist simultaneously, and B exists alone. In addition, the character "/" in the present application generally indicates the "and/or" relationship between the contextual associated objects.

In the present application, the terms "connection", "combination", "coupling", and "mounting" may be direct connection, combination, coupling, or mounting and may also be indirect connection, combination, coupling, or mounting. Among them, for example, direct connection means that two members or assemblies are connected together without intermediate members, and indirect connection means that two members or assemblies are separately connected to at least one intermediate member and the two members or assemblies are connected to each other by the at least one intermediate member. In addition, "connection" and "coupling" are not limited to physical or mechanical connections or couplings and may include electrical connections or couplings.

In the present application, it is to be understood by those of ordinary skill in the art that a relative term (such as "about", "approximately", and "substantially") used in conjunction with a quantity or a condition includes a stated value and has a meaning dictated by the context. For example, the relative term includes at least a degree of error associated with the measurement of a particular value, a tolerance caused by manufacturing, assembly, and use associated with the particular value, and the like. Such a relative term should also be considered as disclosing the range defined by the absolute values of the two endpoints. The relative term may refer to that an indicated value is added or reduced by a certain percentage (such as 1%, 5%, 10%, or more). A value not modified by the relative term should also be disclosed as a particular value with a tolerance. In addition, when expressing a relative angular position relationship (for example, substantially parallel or substantially perpendicular), "substantially" may refer to that a certain degree (such as 1 degree, 5 degrees, 10 degrees, or more) is added to or subtracted from the indicated angle.

In the present application, it is to be understood by those of ordinary skill in the art that the function implemented by an assembly may be implemented by one assembly, multiple assemblies, one part, or multiple parts. Similarly, a function implemented by a part may be implemented by one part, one assembly, or a combination of parts.

In the present application, the terms "up", "down", "left", "right", "front", and "rear", and other directional words are described based on the orientation or positional relationship shown in the drawings and should not be understood as limitations to the examples of the present application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, a lower side may include directly below, bottom left, bottom right, front bottom, and rear bottom.

In the present application, the terms "controller", "processor", "central processing unit", "central processing unit (CPU)", and "microcontroller unit (MCU)" are interchangeable. Where a unit such as the "controller", the "processor", the "central processing unit", the "CPU", or the "MCU" is configured to perform specific functions, these functions may be performed by a single one of the preceding units or multiple preceding units unless otherwise indicated.

In the present application, the term "device", "module", or "unit" is used to implement a specific function in the form of hardware or software.

In the present application, the terms "computing", "judging", "controlling", "determining", "identifying", and the like refer to the operations and processes of a computer system or similar electronic computing device (for example, the controller, the processor, or the like).

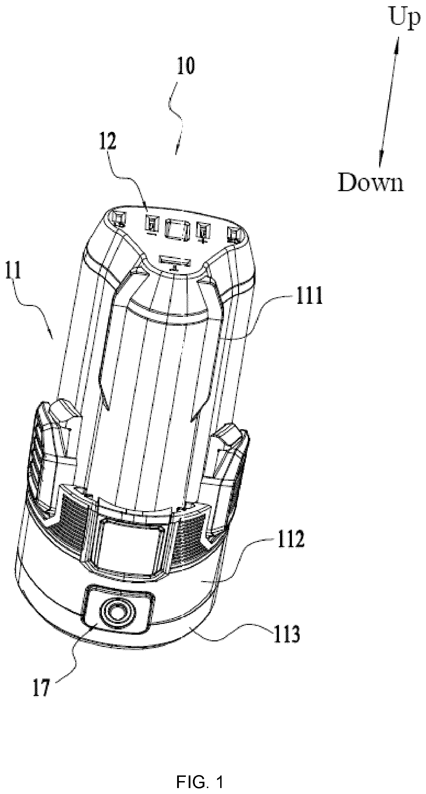

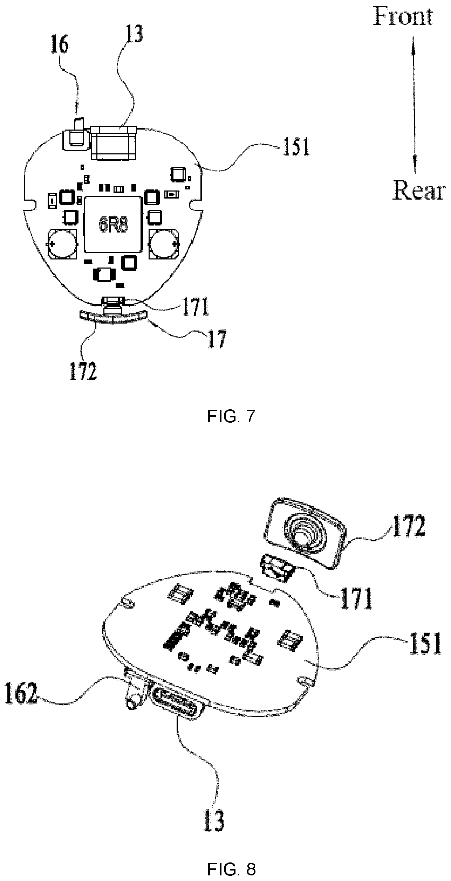

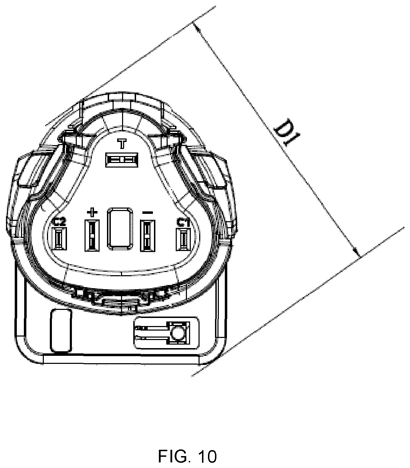

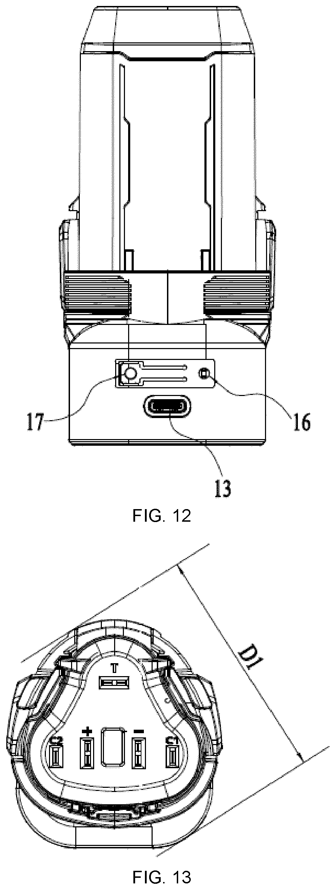

A battery pack 10 shown in FIGS. 1 to 14 is adaptable to various types of handheld power tools, for example, electric drills, circular saws, multifunctional power tools, nail guns, jigsaws, and impact screwdrivers. In other examples, the battery pack 10 may also power small household electrical devices, for example, flashlights, reading lamps, mobile phones, or laptops. In this example, the battery pack 10 is removable from one power tool to power another power tool of the same type or another power tool of a different type.

With continued reference to FIGS. 1 to 14, the battery pack 10 may include a housing assembly 11, connection terminals 12, a type-C port 13, and cell units 14 accommodated in the housing assembly 11. In this example, the housing assembly 11 may include at least a support housing 111 that accommodates or supports at least the cell units 14, a base 112 disposed at the lower end of the support housing 111 to fix the support housing 111, and a base cover 113 disposed at the lower end of the base 112 to cover the base 112. In other examples, the housing assembly 11 may be divided into two portions, for example, upper/lower housings or left/right housings. Alternatively, the housing assembly 11 may be divided into three portions, for example, left/central/right housings. In an example, the base 112 and the base cover 113 may be integral. In an example, the base cover 113 can be detachably mounted to the base 112, and the support housing 111 is partially surrounded by the base 112. That is to say, the maximum diameter of the support housing 111 or at least the outer diameter of the bottom of the support housing 111 is less than the inner diameter of the upper end of the base 112. The number of portions that can be included by the housing assembly 11 and the relative positional relationships or connection forms between the different portions are not limited in this example.

In this example, the housing assembly 11 may be formed with a tubular structure. The tubular structure may also be understood as an approximately tubular structure. A tubular shape or an approximately tubular shape may be understood as a regular cylinder or a regular polygonal tube. That is, all cross-sectional views of the tubular structure perpendicular to an up and down direction are substantially the same. For example, the cross-sectional views of the tubular structure perpendicular to the up and down direction may be circular, triangular, square, or in the shape of another regular or irregular polygon. Additionally, the tubular shape or the approximately tubular shape may also be understood as an irregular cylinder or polygon. That is, the cross-sectional views of the tubular structure are at least partially different from top to bottom. For example, the upper half of the tubular structure is in the shape of a cylinder with a small diameter, and the lower half of the tubular structure is in the shape of a cylinder with a slightly large diameter. Alternatively, a cross-sectional view of the upper half of the tubular structure is approximately triangular, and a cross-sectional view of the lower half of the tubular structure is approximately in the shape of a quadrangle such as a rectangle or a square. In summary, any structure in a shape having at least continuous or discontinuous sidewalls may be regarded as the tubular structure or the approximately tubular structure in the present application. In the present application, a cross section of the tubular structure is understood as a cross section of the tubular structure perpendicular to the up and down direction. In this example, the top view or bottom view of the tubular structure in the up and down direction may be the same as or different from the preceding cross-sectional views.

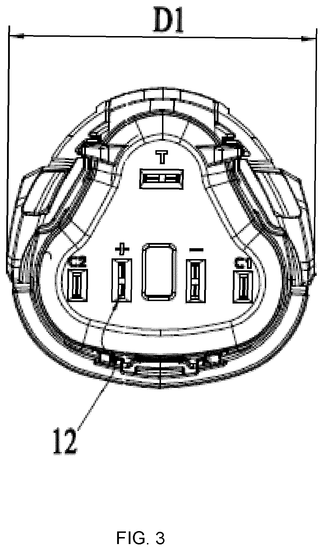

In this example, as shown in FIGS. 3, 10, and 13, the maximum distance D1 between any two points in a top view of the housing assembly 11 formed with the tubular structure in the up and down direction is less than or equal to 80 mm, less than or equal to 75 mm, less than or equal to 70 mm, less than or equal to 65 mm, less than or equal to 60 mm, or the like. The maximum distance D1 may be understood as the maximum distance between any two points in a top view of the battery pack.

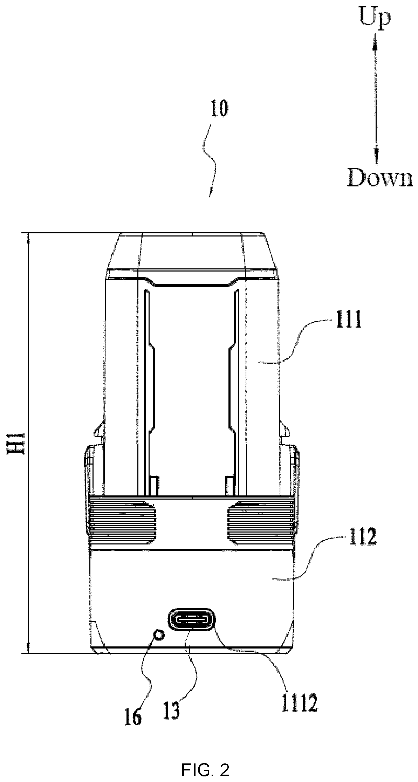

As shown in FIG. 2, the maximum height H1 of the housing assembly 11 with the tubular structure is less than or equal to 120 mm, less than or equal to 110 mm, less than or equal to 100 mm, less than or equal to 90 mm, or the like. With compact and portable design, the battery pack 10 can be a preferred power supply device for handheld power tools or small household electrical devices.

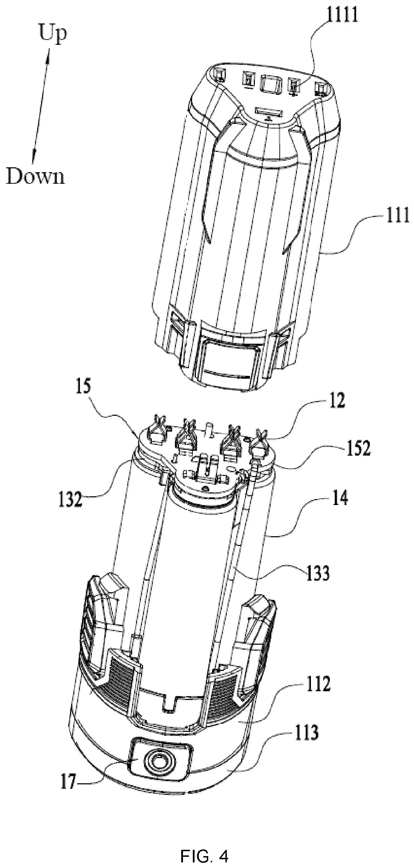

In this example, at least one cell unit 14 is provided. That is to say, at least one cell unit 14 is disposed in the housing assembly 11. In an example, three cell units 14 are accommodated in the housing assembly 11. The cell units 14 may be cylindrical batteries, square batteries, or other types of batteries. The cell units 14 may be lithium-ion batteries, lithium polymer batteries, sodium-ion batteries, ternary lithium batteries, lithium iron phosphate batteries, or the like. In this example, as shown in FIGS. 4 to 6, FIG. 11, and FIG. 14, the three cell units 14 may be arranged side by side, and side surfaces of every two of the cell units 14 are in contact with each other. A formed cross section of the cell units 14 is approximately triangular. In other words, end surfaces of the positive electrodes or end surfaces of the negative electrodes of the three cell units 14 are in the same plane. In an example, the three cell units 14 may be arranged linearly, that is, the end surfaces of the positive electrodes or the end surfaces of the negative electrodes of the three cell units 14 are collinear. In other examples, the three cell units 14 may be arranged in another shape, which is not limited here. In this example, at least two of the cell units 14 in the battery pack 10 may be connected in parallel, connected in series, or connected in series and parallel. It is to be understood that the nominal voltage, capacity, or the like of the battery pack 10 depends on the number of cell units 14 and the manner in which the cell units 14 are connected to each other.

In this example, each of the cell units 14 may be a cylindrical 18650 battery unit (having a diameter of 18 mm and a length of 65 mm). In other examples, each of the battery units 115 may be a cylindrical 14500 battery unit (having a diameter of 14 mm and a length of 50 mm), a 14650 battery unit (having a diameter of 14 mm and a length of 65 mm), a 17500 battery unit (having a diameter of 17 mm and a length of 50 mm), a 17670 battery unit (having a diameter of 17 mm and a length of 67 mm), a 18500 battery unit (having a diameter of 18 mm and a length of 50 mm), a 26650 battery unit (having a diameter of 26 mm and a length of 65 mm), a 26700 battery unit (having a diameter of 26 mm and a length of 70 mm), or the like.

In some examples, each cell unit 14 may have a nominal voltage ranging from 3.6 V to 4.2 V. Thus, the battery pack 10 may have a nominal voltage of approximately greater than 8 V, for example, 10.8 V, 12 V, or 14 V. In some examples, the capacity of a single cell unit 14 is approximately 2.4 Ah, 3 Ah, 4 Ah, 5 Ah, 6 Ah, 7 Ah, 8 Ah, or any value between the preceding values. For example, the capacity of the single cell unit 14 may be any value between 2.4 Ah and 5 Ah or any value between 5Ah and 8Ah.

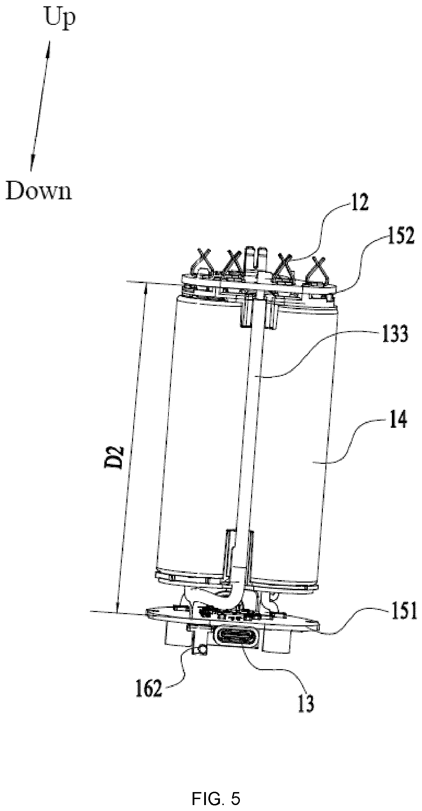

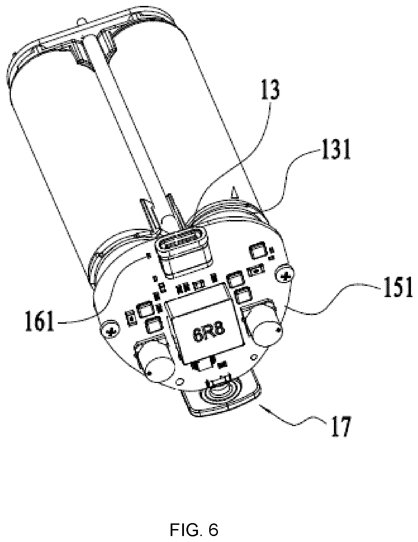

As shown in FIG. 4, the cell units 14 and a circuit board assembly 15 may be accommodated in the housing assembly 11. The circuit board assembly 15 includes at least one circuit board. As shown in FIG. 5, the circuit board assembly 15 may include a type-C circuit board 151 and a terminal circuit board 152. In this example, the circuit board assembly 15 may be fixed to the cover plates or support of the cell units 14 through screws or other fasteners. As shown in FIGS. 5 and 6, the type-C circuit board 151 is fixed to the lower cover plate 131 of the cell units 14 through screws, and the terminal circuit board 152 is fixed to the upper cover plate 132 of the cell units 14 through screws.

In this example, a power line 133 is connected between the type-C circuit board 151 and the terminal circuit board 152, or a power line 133 is connected between the cell units 14 and the type-C circuit board 151 and/or the terminal circuit board 152. As shown in FIGS. 4 to 6, the power line 133 may be arranged in the gap between adjacent cell units 14, which does not affect the overall volume of the battery pack 10 and allows simple and easy wiring.

As shown in FIGS. 1 to 14, the connection terminals 12 may be disposed at the upper end of the housing assembly 11. According to the invention, the connection terminals 12 are configured to be connected to a power tool 20 and mated with tool connection terminals on the power tool to power the power tool. Alternatively, the connection terminals 12 may be connected to a charger and mated with charger terminals on the charger to charge the battery pack 10. According to the invention, the connection terminals 12 include a positive terminal, a negative terminal, a communication terminal, and a temperature detection terminal, and the like. As shown in FIGS. 4 and 5, the connection terminals 12 are disposed on the terminal circuit board 152 and open upwards or in the longitudinal extension direction of the cell units 14. In this example, the connection terminals 12 are accommodated in the housing assembly 11. To enable the connection terminals 12 to be electrically connected to the power tool or the charger, as shown in FIG. 4, a respective terminal opening 1111 is provided on the upper end surface of the support housing 111 for each terminal. The connection terminals 12 are connected to the outside through terminal openings 1111. It is to be understood that to be electrically connected to the connection terminals 12 disposed in the housing assembly 11, the tool connection terminals of the power tool adapted to the battery pack 10 may be exposed to an external environment, or the charger terminals of the charger adapted to the battery pack 10 may be exposed to a surrounding environment.

The type-C port 13 may be disposed at the lower end of the housing assembly 11 or a side surface of the housing assembly 11. Alternatively, the type-C port 13 may be disposed on the same surface as the connection terminals 12. Referring to FIG. 5, and according to the invention, the type-C port 13 is disposed on the type-C circuit board 151 located on the lower end surface of the cell units 14. Referring to FIG. 2, a type-C opening 1112 may be provided on the base 112 to accommodate the type-C port 13 and allows the type-C port 13 to be connected to the outside. Alternatively, a type-C opening 1112 may be provided on the base cover 113. Alternatively, a type-C opening 1112 is formed at the joint between the base 112 and the base cover 113. In this example, the power tool and/or the charger may be connected to the type-C port 13 through a power cord adapted to the type-C port 13.

In an example, the connection terminals 12 and the type-C port 13 may be connected to the power tool or an electrical device simultaneously to power the power tool or the electrical device. In an example, the connection terminals 12 may be connected to the electrical device to power the electrical device, and the type-C port 13 is connected to the charger to charge the battery pack 10 simultaneously. In an example, the type-C port 13 may be connected to the electrical device to power the electrical device, and the connection terminals 12 are connected to the charger to charge the battery pack 10 simultaneously. In an example, the connection terminals 12 and the type-C port 13 may be simultaneously connected to different types of chargers to charge the battery pack. The present application does not specifically limit the control logic of a charging circuit and a discharging circuit in the battery pack 10.

In an example, the charging power of the connection terminals 12 and the charging power of the type-C port 13 may be the same or different. In an example, the discharging power of the connection terminals 12 and the discharging power of the type-C port 13 may be the same or different. In an example, an output voltage or an input voltage of the type-C port 13 may be any value between 5 V and 21 V, for example, 5 V, 10 V, 12 V, 15 V, 18 V, or 20 V. An output voltage of the connection terminals 12 is greater than 5 V and less than or equal to 12 V, for example, 5 V, 6 V, 7 V, 8 V, 9 V, or 10 V. An input voltage of the connection terminals 12 is greater than or equal to 8 V and less than or equal to 15 V, for example, 8 V, 10 V, 11 V, 14 V, or 15 V.

In an example, the connection terminals 12 are disposed on the terminal circuit board 152, and the type-C port 13 is disposed on the type-C circuit board 151. The type-C circuit board 151 and the terminal circuit board 152 may be disposed on two end surfaces of the cell units 14, respectively. As shown in FIGS. 4 and 5, and according to the invention, the terminal circuit board 152 is disposed on the upper end surface of the cell units 14, and the type-C circuit board 151 is disposed on the lower end surface of the cell units 14. In this example, referring to FIG. 5, the distance D2 between the type-C circuit board 151 and the terminal circuit board 152 in a height direction, that is, the up and down direction is less than or equal to 80 mm or less than or equal to 75 mm.

In an example, the type-C circuit board 151 and the terminal circuit board 152 may be disposed on the same end surface of the cell units 14. For example, the type-C circuit board 151 is disposed on one end surface of the cell units 14, and the terminal circuit board 152 is disposed on the type-C circuit board 151. A buffer, a board support, or the like may be disposed between the two circuit boards to prevent them from compressing each other.

In an example, the connection terminals 12 may be disposed in the battery pack 10 through insert molding, and it is unnecessary to dispose the terminal circuit board 152 in the battery pack 10. The type-C circuit board 151 and the connection terminals 12 are disposed on the two end surfaces of the cell units 14, respectively. Alternatively, the type-C circuit board 151 may be disposed between the connection terminals 12 and one end surface of the cell units 14. In an example, a BMS management module (not shown) is disposed on the type-C circuit board 151 and can manage at least the charging/discharging state at the type-C port 13 or the electrical energy transfer power at the type-C port 13. In other examples, the BMS management module may also manage the charging/discharging state at the connection terminals 12 or the electrical energy transfer power at the connection terminals 12.

As shown in FIG. 2, the battery pack 10 may further include an indicator 16 for displaying an electric quantity. The indicator 16 for displaying the electric quantity can display at least the electric quantity of the battery pack 10 or may further display the charging and discharging states of the battery pack 10 or a fault of the battery pack 10. In an example, as shown in FIGS. 5 to 8, the member 16 for displaying the electric quantity may include a display lamp 161 such as an LED lamp. A light guide member 162 is configured to guide the light from the display lamp 161 to the external environment. It is to be understood that the light guide member 162 at least partially covers the display lamp 161 to guide the light from the display lamp 161 to the outside. As shown in FIGS. 5 to 8, the display lamp 161 may be disposed on the type-C circuit board 151 and near the type-C port 13. In this example, the display lamp 161 and the type-C port 13 are disposed on the same surface of the type-C circuit board 151.

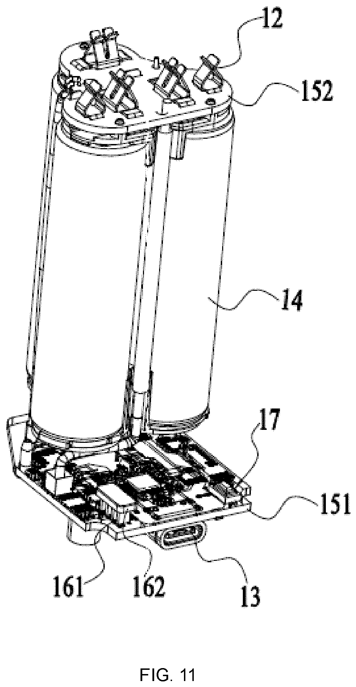

In an example, as shown in FIG. 11, the display lamp 161 and the type-C port 13 are disposed on different surfaces of the type-C circuit board 151. For example, the display lamp 161 is disposed on the upper surface of the type-C circuit board 151, and the type-C port 13 is disposed on the lower surface of the type-C circuit board 151. Alternatively, the display lamp 161 is disposed on the lower surface of the type-C circuit board 151, and the type-C port 13 is disposed on the upper surface of the type-C circuit board 151.

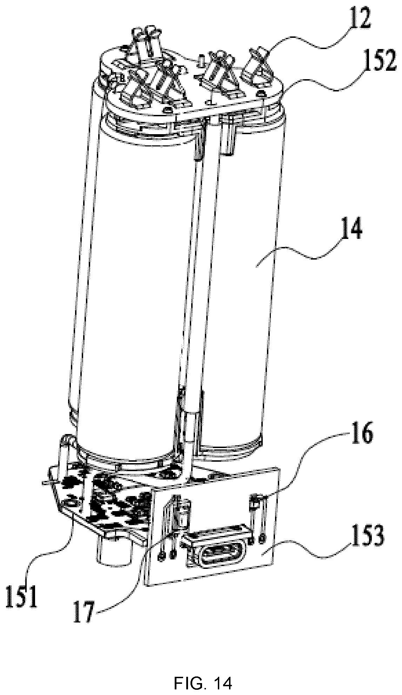

In an example, as shown in FIG. 14, the display lamp 161 and the type-C port 13 may be disposed on different circuit boards. In an example, the circuit board assembly 15 may further include a lamp display board 153 sleeved on the type-C circuit board 151. At least the type-C port 13 passes through the lamp display board 153. In this example, the display lamp 161 is disposed on the lamp display board 153, and the type-C port 13 is disposed on the type-C circuit board 151.

In an example, the indicator 16 for displaying the electric quantity may further include multiple lamp beads for displaying the electric quantity or multiple lamp strips for displaying the electric quantity. The lamp beads for displaying the electric quantity or the lamp strips for displaying the electric quantity can be disposed around the type-C port 13, for example, in a complete circle, in a semicircle, or discontinuously. On the basis that the intuitiveness and aesthetics of the indicator for displaying the electric quantity are ensured, it can be convenient for a user to find the type-C port 13 and plug a power cord.

In an example, the battery pack 10 further includes a switch member 17. As shown in FIG. 4 and FIGS. 9 to 14, the switch member 17 includes a switch 171 disposed on the type-C circuit board 151 and an operation member 172 for the user to operate to trigger the switch 171. In this example, the operation member 172 may be a physical mechanical button, a touch screen, or another type of operation member. In this example, as shown in FIGS. 4 to 8, the switch member 17 or the switch 171 and the type-C port 13 are disposed opposite to each other on the type-C circuit board 151. In other words, the switch 171 and the type-C port 13 are disposed opposite to each other or are at least not disposed on the same side of the type-C circuit board 151. For example, the type-C port 13 is disposed on the front side of the type-C circuit board 151, the switch member 17 is disposed on the rear side of the type-C circuit board 151, and vice versa.

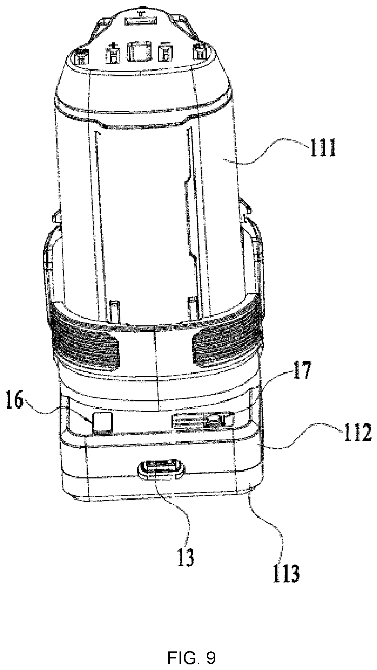

In an example, as shown in FIGS. 9 to 11, the switch member 17 or the switch 171 and the type-C port 13 are disposed on the same side of the type-C circuit board 151 but located on the different surfaces of the type-C circuit board 151.

In an example, as shown in FIG. 14, the switch member 17 or the switch 171 may be disposed on the lamp display board 153.

In this example, the operation member 172 may also be used as the power button of the battery pack 10. For example, the user may operate the operation member 172 to activate the battery pack 10 so that the battery pack 10 can be charged or discharge electricity. Alternatively, the user may operate the operation member 172 to trigger the switch 171 so that the display lamp 161 displays a state of charge or other states of the battery pack 10, for example, a charging state, a discharging state, or a fault state.

## Claims

1. A battery pack (10) applicable to a power tool, comprising:
a housing assembly (11);
a connection terminal (12) configured to transfer electrical energy and be mated with tool connection terminals on the power tool to power the power tool, wherein the connection terminals comprise a positive terminal, a negative terminal, a communication terminal, and a temperature detection terminal;
at least one cell unit (14) disposed in the housing assembly (11) and electrically coupled to the connection terminal (12);
a type-C port (13) disposed on a type-C circuit board (151) to transfer electrical energy, **characterized in that** the type-C circuit board (151) is disposed on the lower end surface of the at least one cell unit (14); and
a terminal circuit board (152) electrically coupled to the connection terminal (12), wherein the terminal circuit board (152) is disposed on the upper end surface of the at least one cell unit (14).

2. The battery pack (10) according to claim 1, wherein a distance (D2) between a terminal circuit board (152) and the type-C circuit board (151) along a height direction is less than or equal to 80 mm.

3. The battery pack (10) according to claim 1, wherein a battery management system (BMS) management module is disposed on the type-C circuit board (151).

4. The battery pack (10) according to claim 1, wherein a rated voltage of the battery pack (10) is greater than or equal to 8 V.

5. The battery pack (10) according to claim 1, wherein an output voltage and/or an input voltage of the type-C port (13) is greater than or equal to 5 V and less than or equal to 21 V.

6. The battery pack (10) according to claim 1, wherein the at least one cell unit (14) comprises three cylindrical cell units.

7. The battery pack (10) according to claim 1, wherein the housing assembly (11) is configured to have a tubular structure, and a maximum height (H1) of the tubular structure is less than or equal to 120 mm.

8. The battery pack (10) according to claim 7, wherein a maximum distance (D1) between any two points in a top view of the tubular structure or a bottom view of the tubular structure in an up and down direction is less than or equal to 60 mm.

9. The battery pack (10) according to claim 1, further comprising an indicator (16) for displaying an electric quantity, wherein the indicator (16) and the type-C port (13) are disposed on a same surface of the type-C circuit board (151).

10. The battery pack (10) according to claim 9, wherein the indicator (16) comprises a plurality of lamp beads for displaying the electric quantity or a lamp strip for displaying the electric quantity, and the plurality of lamp beads or the lamp strip are disposed around the type-C port (13).

11. The battery pack (10) according to claim 1, further comprising a switch member (17) at least operable to activate the battery pack (10), wherein the switch member (17) comprises at least a switch (171) and an operation member (172) that is operable to trigger the switch (171), and the switch (171) and the type-C port (13) are disposed opposite to each other on the type-C circuit board (151).

12. The battery pack (10) according to claim 11, wherein the switch member (17) is further configured to be capable of activating the indicator (16).

13. The battery pack (10) according to claim 1, further comprising a power line (133) connected between the type-C circuit board (151) and the terminal circuit board (152), wherein the power line (133) is arranged in a gap between adjacent cell units (14).

14. The battery pack (10) according to claim 1, wherein the connection terminals (12) and the type-C port (13) are simultaneously connected to different types of chargers to charge the battery pack (10).

## Patentansprüche

1. Akkupack (10) für ein Elektrowerkzeug, umfassend:
eine Gehäuseanordnung (11);
eine Anschlussklemmenanordnung (12), die dazu ausgebildet ist, elektrische Energie zu übertragen und mit Werkzeuganschlussklemmen an dem Elektrowerkzeug gekoppelt zu werden, um das Elektrowerkzeug mit Energie zu versorgen, wobei die Anschlussklemmen einen positiven Anschluss, einen negativen Anschluss, einen Kommunikationsanschluss und einen Temperaturerfassungsanschluss umfassen;
mindestens eine Zelleneinheit (14), die in der Gehäuseanordnung (11) angeordnet und elektrisch mit der Anschlussklemmenanordnung (12) gekoppelt ist;
einen Typ-C-Anschluss (13), der auf einer Typ-C-Leiterplatte (151) angeordnet ist, um elektrische Energie zu übertragen, **dadurch gekennzeichnet, dass**
die Typ-C-Leiterplatte (151) an der unteren Endfläche der mindestens einen Zelleneinheit (14) angeordnet ist; und
eine Anschlussklemmen-Leiterplatte (152), die elektrisch mit der Anschlussklemmenanordnung (12) gekoppelt ist, wobei die Anschlussklemmen-Leiterplatte (152) an der oberen Endfläche der mindestens einen Zelleneinheit (14) angeordnet ist.

2. Akkupack (10) nach Anspruch 1, wobei ein Abstand (D2) zwischen einer Anschlussklemmen-Leiterplatte (152) und der Typ-C-Leiterplatte (151) entlang einer Höhenrichtung kleiner als oder gleich 80 mm ist.

3. Akkupack (10) nach Anspruch 1, wobei ein Batterie-Management-System-(BMS)-Managementmodul auf der Typ-C-Leiterplatte (151) angeordnet ist.

4. Akkupack (10) nach Anspruch 1, wobei eine Nennspannung des Akkupacks (10) größer als oder gleich 8 V ist.

5. Akkupack (10) nach Anspruch 1, wobei eine Ausgangsspannung und/oder eine Eingangsspannung des Typ-C-Anschlusses (13) größer als oder gleich 5 V und kleiner als oder gleich 21 V ist.

6. Akkupack (10) nach Anspruch 1, wobei die mindestens eine Zelleneinheit (14) drei zylindrische Zelleneinheiten umfasst.

7. Akkupack (10) nach Anspruch 1, wobei die Gehäuseanordnung (11) dazu ausgebildet ist, eine rohrförmige Struktur aufzuweisen, und eine maximale Höhe (H1) der rohrförmigen Struktur kleiner als oder gleich 120 mm ist.

8. Akkupack (10) nach Anspruch 7, wobei ein Maximalabstand (D1) zwischen beliebigen zwei Punkten in einer Draufsicht der rohrförmigen Struktur oder einer Untersicht der rohrförmigen Struktur in einer Oben-Unten-Richtung kleiner als oder gleich 60 mm ist.

9. Akkupack (10) nach Anspruch 1, ferner umfassend eine Anzeige (16) zum Anzeigen einer elektrischen Menge, wobei die Anzeige (16) und der Typ-C-Anschluss (13) auf derselben Fläche der Typ-C-Leiterplatte (151) angeordnet sind.

10. Akkupack (10) nach Anspruch 9, wobei die Anzeige (16) eine Mehrzahl von Leuchtperlen zum Anzeigen der elektrischen Menge oder einen Leuchtstreifen zum Anzeigen der elektrischen Menge umfasst, und die Mehrzahl von Leuchtperlen oder der Leuchtstreifen um den Typ-C-Anschluss (13) angeordnet sind.

11. Akkupack (10) nach Anspruch 1, ferner umfassend ein Schaltelement (17), das zumindest betätigbar ist, um den Akkupack (10) zu aktivieren, wobei das Schaltelement (17) zumindest einen Schalter (171) und ein Betätigungselement (172) umfasst, das betätigbar ist, um den Schalter (171) auszulösen, und der Schalter (171) und der Typ-C-Anschluss (13) einander gegenüberliegend auf der Typ-C-Leiterplatte (151) angeordnet sind.

12. Akkupack (10) nach Anspruch 11, wobei das Schaltelement (17) ferner dazu ausgebildet ist, die Anzeige (16) aktivieren zu können.

13. Akkupack (10) nach Anspruch 1, ferner umfassend eine Stromleitung (133), die zwischen der Typ-C-Leiterplatte (151) und der Anschlussklemmen-Leiterplatte (152) verbunden ist, wobei die Stromleitung (133) in einem Zwischenraum zwischen benachbarten Zelleneinheiten (14) angeordnet ist.

14. Akkupack (10) nach Anspruch 1, wobei die Anschlussklemmen (12) und der Typ-C-Anschluss (13) gleichzeitig mit verschiedenen Arten von Ladegeräten verbunden sind, um den Akkupack (10) zu laden.

## Revendications

1. Bloc-batterie (10) applicable à un outil électrique, comprenant :
un ensemble de boîtier (11) ;
un ensemble de bornes de connexion (12) configuré pour transférer de l'énergie électrique et être accouplé à des bornes de connexion d'outil sur l'outil électrique afin d'alimenter l'outil électrique, dans lequel les bornes de connexion comprennent une borne positive, une borne négative, une borne de communication, et une borne de détection de température ;
au moins une unité de cellule (14) disposée dans l'ensemble de boîtier (11) et électriquement couplée à l'ensemble de bornes de connexion (12) ;
un port de type C (13) disposé sur une carte de circuit de type C (151) pour transférer de l'énergie électrique, **caractérisé en ce que**
la carte de circuit de type C (151) est disposée sur la surface d'extrémité inférieure de ladite au moins une unité de cellule (14) ; et
une carte de circuit de bornes de connexion (152) électriquement couplée à l'ensemble de bornes de connexion (12), dans laquelle la carte de circuit de bornes de connexion (152) est disposée sur la surface d'extrémité supérieure de ladite au moins une unité de cellule (14).

2. Bloc-batterie (10) selon la revendication 1, dans lequel une distance (D2) entre une carte de circuit de bornes de connexion (152) et la carte de circuit de type C (151) le long d'une direction de hauteur est inférieure ou égale à 80 mm.

3. Bloc-batterie (10) selon la revendication 1, dans lequel un module de gestion d'un système de gestion de batterie (BMS) est disposé sur la carte de circuit de type C (151).

4. Bloc-batterie (10) selon la revendication 1, dans lequel une tension nominale du bloc-batterie (10) est supérieure ou égale à 8 V.

5. Bloc-batterie (10) selon la revendication 1, dans lequel une tension de sortie et/ou une tension d'entrée du port de type C (13) est supérieure ou égale à 5 V et inférieure ou égale à 21 V.

6. Bloc-batterie (10) selon la revendication 1, dans lequel ladite au moins une unité de cellule (14) comprend trois unités de cellule cylindriques.

7. Bloc-batterie (10) selon la revendication 1, dans lequel l'ensemble de boîtier (11) est configuré pour avoir une structure tubulaire, et une hauteur maximale (H1) de la structure tubulaire est inférieure ou égale à 120 mm.

8. Bloc-batterie (10) selon la revendication 7, dans lequel une distance maximale (D1) entre deux points quelconques dans une vue de dessus de la structure tubulaire ou une vue de dessous de la structure tubulaire dans une direction haut-bas est inférieure ou égale à 60 mm.

9. Bloc-batterie (10) selon la revendication 1, comprenant en outre un indicateur (16) pour afficher une quantité électrique, dans lequel l'indicateur (16) et le port de type C (13) sont disposés sur une même surface de la carte de circuit de type C (151).

10. Bloc-batterie (10) selon la revendication 9, dans lequel l'indicateur (16) comprend une pluralité de perles lumineuses pour afficher la quantité électrique ou une bande lumineuse pour afficher la quantité électrique, et la pluralité de perles lumineuses ou la bande lumineuse sont disposées autour du port de type C (13).

11. Bloc-batterie (10) selon la revendication 1, comprenant en outre un élément d'interrupteur (17) opérable au moins pour activer le bloc-batterie (10), dans lequel l'élément d'interrupteur (17) comprend au moins un interrupteur (171) et un élément d'actionnement (172) qui est opérable pour déclencher l'interrupteur (171), et l'interrupteur (171) et le port de type C (13) sont disposés l'un en face de l'autre sur la carte de circuit de type C (151).

12. Bloc-batterie (10) selon la revendication 11, dans lequel l'élément d'interrupteur (17) est en outre configuré pour être capable d'activer l'indicateur (16).

13. Bloc-batterie (10) selon la revendication 1, comprenant en outre une ligne d'alimentation (133) connectée entre la carte de circuit de type C (151) et la carte de circuit de bornes de connexion (152), dans lequel la ligne d'alimentation (133) est agencée dans un espace entre des unités de cellule adjacentes (14).

14. Bloc-batterie (10) selon la revendication 1, dans lequel les bornes de connexion (12) et le port de type C (13) sont simultanément connectés à différents types de chargeurs pour charger le bloc-batterie (10).
